# FASCICULE DE BREVET EUROPEEN

(11) **EP 0 814 298 B1**
(45) Date de publication et mention de la délivrance du brevet: **02.07.2003**
(21) Numéro de dépôt: 97400929.2
(22) Date de dépôt: 23.04.1997
(51) Int. Cl.: F17D 1/04, F16K 7/16

(54) **Dipositif pour fournir à un appareil l'un quelconque de plusieurs gaz**
Vorrichtung zum Speisen eines Gerätes von einer von mehreren Gasstellen
Device to supply gas to an apparatus from one of a number of supplies

(30) Priorité: 18.06.1996 FR 9607560
(43) Date de publication de la demande: 29.12.1997
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Girard, Jean-Marc, 75010 Paris (FR); Mail, Alain, 38420 Domene (FR); Marot, Yves, 78530 Buc (FR)
(74) Mandataire: Vesin, Jacques

(56) Documents cités:
- WO-A-91/00460
- US-A- 3 019 815
- US-A- 5 065 794
- US-A- 5 139 225

## Description

L'invention est relative à un dispositif pour fournir à un appareil, notamment un analyseur de traces d'impuretés tel qu'un spectromètre de masse à ionisation à pression atmosphérique, l'un quelconque de plusieurs gaz.

Dans le domaine de l'analyse de gaz de très haute pureté, on est de plus en plus amené à analyser avec un même analyseur, séquentiellement et avec un temps de commutation court, des gaz venant de différentes lignes de prélèvement.

Dans ce cas, les gaz contenus dans les lignes de prélèvement peuvent être de différentes sortes, ou encore d'une même sorte mais prélevés en divers endroits d'une installation, par exemple d'une installation de fabrication de composants semi-conducteurs.

On connaît un dispositif de fourniture de gaz dans lequel chaque ligne de prélèvement est reliée à une ligne commune de fourniture de gaz qui, elle, est reliée à l'analyseur. Une vanne d'arrêt est disposée dans chacune des lignes de prélèvement.

Pour sélectionner un gaz à analyser venant d'une ligne de prélèvement particulière, les vannes d'arrêt des autres lignes de prélèvement sont fermées et seule la vanne de la ligne de prélèvement sélectionnée est commutée à l'état passant.

Ce système connu présente l'inconvénient que l'écoulement stagne dans les lignes de prélèvement bloquées, ce qui provoque des interactions non désirées avec les parois de la canalisation de la ligne, telle que par exemple des phénomènes de désorption ou d'adsorption.

De plus, ce système connu présente, en aval des vannes d'arrêt, des volumes de stagnation d'écoulement dans lesquels s'accumulent des gaz. A chaque fois que l'on commute d'une ligne de prélèvement à une autre et que, par conséquent, on change de gaz à analyser, les gaz accumulés dans ces volumes de stagnation d'écoulement contaminent le nouveau gaz à analyser, et leur élimination nécessite beaucoup de temps. On comprend alors qu'il est impossible de réaliser des temps de commutation courts avec un tel dispositif de fourniture de gaz.

La présente invention vise à pallier ces divers inconvénients en proposant un dispositif de fourniture de gaz qui ne présente pas de volume de stagnation d'écoulement dans la ligne commune de fourniture des gaz, qui permette une purge en continu de chacune des lignes de prélèvement et la commutation rapide d'un gaz à analyser à un autre, tout en assurant que les gaz acheminés à l'analyseur soient rapidement représentatifs.

A cet effet, l'invention a pour objet un dispositif pour fournir à un appareil l'un quelconque de plusieurs gaz, comprenant au moins deux vannes reliées chacune d'une part à une ligne de prélèvement de gaz respective et, d'autre part, à une ligne commune de fourniture de gaz à l'appareil, caractérisé en ce que chaque vanne comprend un premier conduit relié en permanence par une extrémité à la ligne de prélèvement respective et par son autre extrémité à une ligne de purge respective, un deuxième conduit et un actionneur commutable entre une position de mise en communication du premier conduit avec le deuxième conduit et une position d'isolement du premier conduit par rapport au deuxième conduit, au moins le deuxième conduit étant libre de volumes de stagnation d'écoulement, les deuxièmes conduits des vannes sont disposés en série dans la ligne commune de fourniture de gaz, l'extrémité de cette ligne commune, opposée audit appareil, débouchant dans une ligne de purge additionnelle, et chaque ligne de purge passe par un organe de création d'une perte de charge.

Le dispositif suivant l'invention peut comporter une ou plusieurs des caractéristiques suivantes :
- le deuxième conduit de chaque vanne comporte une chambre dans laquelle débouche au moins un conduit de raccordement du premier conduit à ladite chambre, et chaque vanne comporte un organe d'obturation, sur lequel agit l'actionneur de la vanne, qui obture, dans ladite position d'isolement, l'extrémité du conduit de raccordement débouchant dans ladite chambre, et qui est en retrait par rapport à cette extrémité de conduit dans ladite position de mise en communication;
- l'extrémité du conduit de raccordement débouchant dans ladite chambre, est munie d'un joint d'étanchéité en saillie dans la chambre, et l'organe d'obturation comprend une membrane élastiquement déformable formant une partie de paroi de la chambre opposée au joint d'étanchéité, la membrane étant appliquée de façon étanche sur le joint d'étanchéité à l'encontre de la force d'élasticité de la membrane dans ladite position d'isolement, par un poussoir de l'actionneur;
- chaque ligne de purge comporte un organe respectif de création d'une perte de charge;
- toutes les lignes de purge sont raccordées, en aval des organes de création d'une perte de charge, à une ligne d'évacuation commune;
- les lignes de prélèvement et la ligne de purge additionnelle comportent chacune un organe de création d'une perte de charge, les lignes de purge associées à chaque vanne sont réunies en une ligne de purge commune, la ligne de purge commune comporte un déverseur pour régler une pression constante dans la ligne commune de fourniture de gaz;
- au moins un organe de création d'une perte de charge est un organe de régulation de débit;
- chaque organe de régulation de débit est formé par un orifice calibré;
- chaque vanne comporte des moyens de commande de la commutation de l'actionneur entre lesdites positions de mise en communication et d'isolement, les moyens de commande de chaque vanne sont reliés à une unité de commande d'isolement ou de mise en communication de chaque vanne, et l'unité de commande comporte des moyens logiques qui interdisent la commutation simultanée de plusieurs actionneurs en position de communication.

D'autres caractéristiques et avantages de l'invention ressortiront de la description suivante donnée à titre d'exemple sans caractère limitatif, en regard des dessins annexés sur lesquels:
La figure 1 est un schéma du dispositif selon l'invention pour fournir à un appareil l'un quelconque de plusieurs gaz;
La figure 2 est une vue en coupe, suivant la ligne ll-ll de la figure 3, d'une vanne du dispositif selon l'invention de la figure 1, en position d'isolement;
La figure 3 est une vue en coupe, suivant la ligne III-III de la figure 2, de la même vanne en position de mise en communication;
La figure 4A est une vue en coupe, suivant la ligne IV-IV de la figure 2, de la vanne en position d'isolement;
La figure 4B est une vue en coupe, suivant la ligne IV-IV de la figure 2, de la vanne en position de mise en communication; et
La figure 5 est un schéma d'une variante du dispositif selon l'invention pour fournir à un appareil l'un quelconque de plusieurs gaz.

### Structure du dispositif de fourniture de gaz :

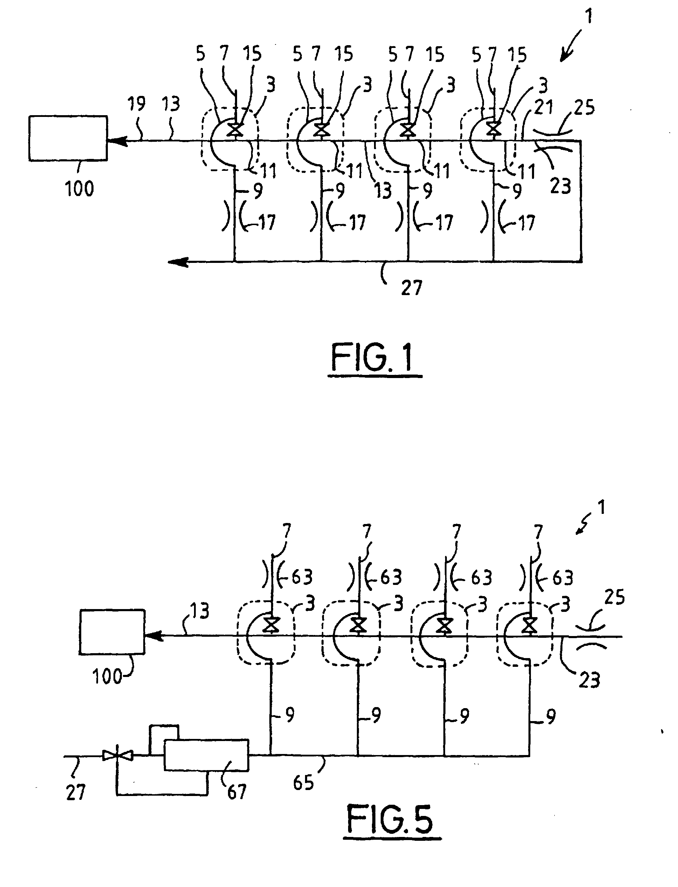

Comme on le voit sur la figure 1, le dispositif de fourniture de gaz 1 comprend quatre vannes 3 représentées de façon schématique entourées par des tirets.

Chaque vanne comprend un premier conduit 5 qui est relié en permanence par une extrémité à une ligne de prélèvement 7 associée et par son autre extrémité à une ligne de purge 9 associée.

Elle comprend en outre un deuxième conduit 11 qui est disposé dans une ligne commune 13 de fourniture de gaz à un appareil 100 tel que par exemple un analyseur de traces d'impuretés dans un gaz du type spectromètre de masse à ionisation à pression atmosphérique.

Le premier conduit 5 et le deuxième conduit 11 de chaque vanne 3 peuvent être mis en communication par l'intermédiaire d'un actionneur 15, comme cela sera expliqué en détail ci-après, commutable entre une position de mise en communication du premier conduit 5 avec le deuxième conduit 11 et une position d'isolement du premier conduit 5 par rapport au deuxième conduit 11.

Chaque ligne de purge 9 associée à une vanne 3 comporte son propre organe de création d'une perte de charge 17. Celui-ci est avantageusement formé par un organe de régulation de débit, par exemple un orifice calibré, pour régler le débit de l'écoulement dans chaque ligne de prélèvement 7, à travers le premier conduit 5 de la vanne 3, vers la ligne de purge 9.

La ligne commune de fourniture de gaz 13 possède une extrémité 19 destinée à être reliée à l'appareil 100. L'extrémité 21 de la ligne commune 13 opposée à l'extrémité 19 et audit appareil 100 débouche dans une ligne de purge additionnelle 23. Cette ligne de purge additionnelle 23 comporte un organe de création d'une perte de charge 25. Cet organe est avantageusement formé par un organe de régulation du débit dans la ligne de purge additionnelle 23, par exemple un orifice calibré.

Les lignes de purge 9 associées aux vannes 3 ainsi que la ligne de purge additionnelle 23 sont toutes raccordées, en aval des organes de création d'une perte de charge 17 et 25, à une ligne d'évacuation commune 27.

### Structure des vannes du dispositif :

On décrit ci-après en détail un exemple de réalisation des vannes 3 installées dans le dispositif de fourniture de gaz 1. De telles vannes du type DAD électropolies sont par exemple commercialisées par la société NUPRO et fabriquées par la société SWAGELOK.

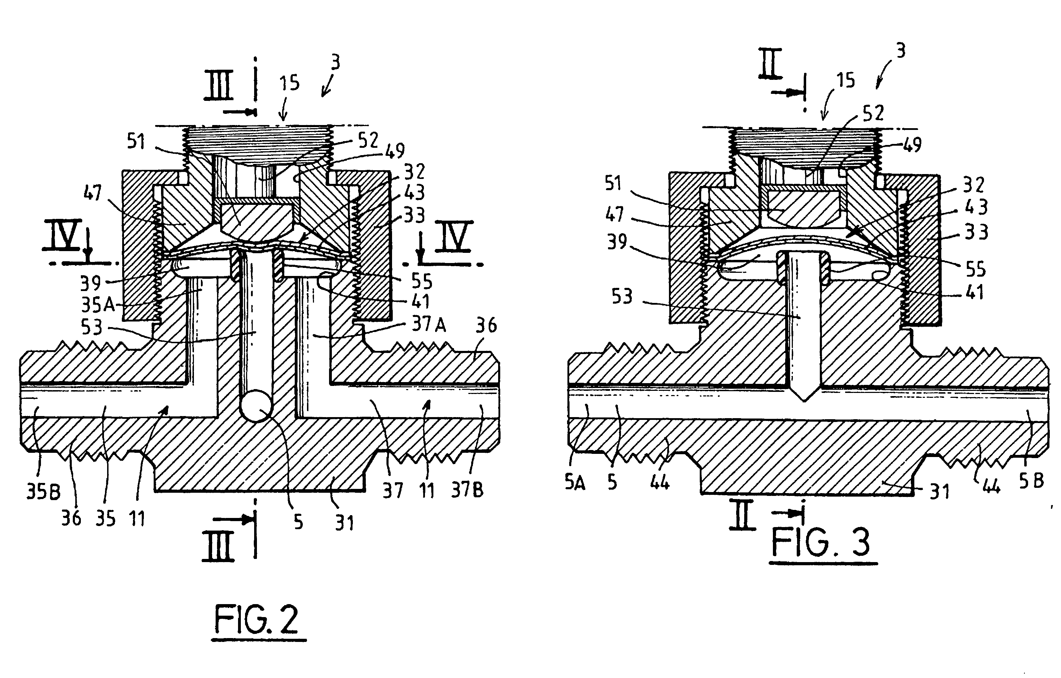

Comme cela est représenté sur les figures 2 et 3, la vanne 3 comporte un corps 31 dans lequel sont réalisés le premier conduit 5 et le deuxième conduit 11, un obturateur 32 et un actionneur 15, représenté en partie, vissé sur le corps 31 au moyen d'un écrou 33.

Le deuxième conduit 11 (Fig.2) est formé par deux tronçons de conduit 35 et 37 et par une chambre annulaire 39, à symétrie de révolution. Dans une partie latérale du fond de cette chambre 39 débouche l'une 35A, 37A des deux extrémités de chaque tronçon de conduit 35, 37.

L'autre extrémité 35B, 37B de chaque tronçon de conduit 35, 37 débouche dans un raccord respectif latéral 36 du corps 31. Ces extrémités 35B et 37B sont diamétralement opposées. Les deux raccords 36 sont destinés à être reliés à la ligne commune 13 de fourniture de gaz.

La chambre 39 est formée par un évidement 41 sensiblement cylindrique, ménagé dans la face supérieure du corps 31, et par l'obturateur 32. Cet obturateur est lui-même constitué d'un ensemble de deux membranes 43 qui recouvrent l'évidement 41 et constituent la paroi supérieure de la chambre 39.

Les membranes 43 sont réalisées en un matériau élastiquement déformable, par exemple du métal. Chaque membrane 43 est un disque dont la partie centrale est bombée dans une direction opposée du corps 31. Le bord des membranes 43 est serré de façon étanche entre le bord annulaire de l'évidement 41 et un bord annulaire d'une pièce de maintien 47 qui fait partie de l'actionneur 15. La pièce 47 est réalisée en forme de cuvette afin de permettre un débattement de la partie bombée des membranes 43.

La pièce de maintien 47 comporte dans sa partie centrale, en regard des membranes 43, un alésage 49 de guidage dans lequel peut coulisser un poussoir 51 mû par une tige 52 de l'actionneur 15.

Le premier conduit 5 de la vanne 3 est un simple perçage droit qui s'étend perpendiculairement à l'axe défini par les extrémités 35B, 37B des tronçons de conduit 35, 37.

Chaque extrémité 5A, 5B du premier conduit 5 débouche également dans un raccord latéral respectif 44 du corps 31. Une des deux extrémités du premier conduit 5 est destinée à être reliée à une ligne de prélèvement associée, l'autre à une ligne de purge associée.

Le premier conduit 5 peut être relié à la chambre 39 par une cheminée de raccordement 53 qui débouche au centre de l'évidement 41.

L'extrémité de la cheminée 53 débouchant dans l'évidement 41 comporte un joint d'étanchéité cylindrique 55 emmanché à force dans le corps 31 de la vanne et qui fait saillie dans la chambre 39.

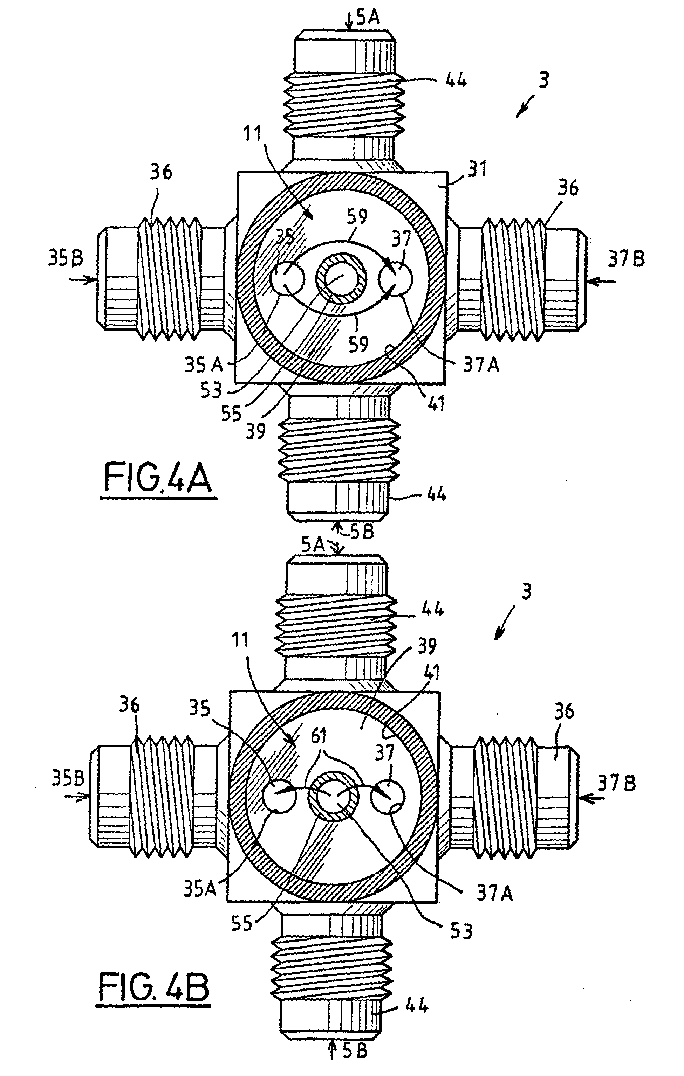

Les figures 2 et 4A montrent la vanne 3 en position d'isolement du premier conduit 5 par rapport au deuxième conduit 11. Dans un tel cas, la partie centrale des membranes 43 est pressée de façon étanche par le poussoir 51 sur le joint d'étanchéité 55, de sorte que la cheminée 53 est isolée par rapport à la chambre 39.

Un gaz introduit dans le deuxième conduit 11 de la vanne circule néanmoins librement, par exemple du tronçon de conduit 35 dans la chambre 39 et, ensuite, dans le tronçon de conduit 37 comme cela est représenté par les flèches 59 sur la figure 4A. On comprend que le deuxième conduit 11 de la vanne ainsi formée ne présente aucun volume de stagnation d'écoulement.

En cas d'isolement du deuxième conduit 11 par rapport au premier conduit 5, le premier conduit 5 ne présente qu'un volume de stagnation très faible correspondant au volume de la cheminée 53.

La figure 3 et la figure 4B correspondent à une position de mise en communication du premier conduit 5 avec le deuxième conduit 11. Dans un tel cas, le poussoir 51 est en retrait. Par la force d'élasticité des membranes 43, celles-ci reprennent leur forme initiale bombée. Par conséquent, il se forme un espace libre entre les membranes 43 et le joint d'étanchéité 55, de sorte que les gaz s'écoulant dans le premier conduit 5 se déversent via la cheminée 53 dans la chambre 39 et, ensuite, dans les deux tronçons 35 et 37 du deuxième conduit 11, comme cela est représenté par les flèches 61 sur la figure 4B.

### Fonctionnement du dispositif de fourniture de gaz:

On explique ci-après le fonctionnement du dispositif de fourniture de gaz 1 en regard de la figure 1. Lors du fonctionnement du dispositif, une seule vanne 3 se trouve dans l'état de mise en communication de son premier conduit 5 avec son deuxième conduit 11. Toutes les autres vannes 3 se trouvent dans l'état d'isolement de leur premier conduit 5 par rapport à leur deuxième conduit 11.

Grâce à la forme de réalisation du premier conduit 5 de chaque vanne, l'écoulement des gaz dans les lignes de prélèvement 7 à travers le premier conduit, en direction de la ligne de purge 9, est maintenu en permanence à un certain débit, qui est déterminé par l'orifice calibré 17 disposé dans la ligne de purge 9.

Seul l'écoulement du gaz venant de la ligne de prélèvement 7 de la vanne en état de mise en communication se répand, à travers la cheminée, dans la chambre de la vanne, et ensuite dans la ligne commune de fourniture de gaz 13, ceci dans les deux sens comme cela a été décrit ci-avant en regard de la figure 4B.

Grâce au fait que l'extrémité 19 de la ligne commune 13 est reliée à l'appareil 100 et que l'autre extrémité débouche dans une ligne de purge additionnelle 23, cette ligne commune de fourniture de gaz 13 est également balayée en continu dans les deux sens. Elle ne présente donc aucun volume de stagnation d'écoulement.

Pour choisir maintenant un gaz venant d'une autre ligne de prélèvement 7, on isole, par l'intermédiaire de l'actionneur 15 correspondant, le premier conduit 5 du deuxième conduit 11 de la vanne jusqu'alors en état de mise en communication, et on met en état de mise en communication une autre vanne 3. Le nouveau gaz à analyser va balayer dans les deux sens, dans la ligne de fourniture 13, les gaz qui étaient encore présents auparavant. Puisque les deuxièmes conduits 11 de chaque vanne 3 ne présentent pas de volume de stagnation, les gaz qui étaient analysés auparavant sont évacués efficacement et rapidement. Ainsi, on réalise un temps de commutation court, et le nouveau gaz à analyser est rapidement représentatif.

Une variante du dispositif de fourniture de gaz 1 est représentée à la figure 5. Ce dispositif 1 se distingue de celui représenté à la figure 1 par le fait que la régulation des débits dans les lignes de prélèvement 7 est effectuée en amont des vannes 3 et non en aval comme cela était décrit en regard de la figure 1.

A cet effet, des organes de création d'une perte de charge 63, de préférence des organes de régulation du débit, par exemple des orifices calibrés, sont disposés dans les lignes de prélèvement 7. Les lignes de purge 9 associées à chaque vanne 3 sont réunies en une ligne de purge commune 65.

Cette ligne de purge commune 65 comporte, en aval des raccordements des lignes de purge 9, un déverseur 67, qui règle la pression en amont des lignes de purge 9 et, par conséquent, dans la ligne commune 13 de fourniture de gaz. Par un tel agencement, un écoulement à pression constante est fourni à l'appareil. Bien entendu, ceci suppose que les sources des différents gaz, en amont des organes 63, sont à une pression suffisante.

Comme il apparaîtra clairement à l'homme du métier, un tel agencement, où un écoulement à pression constante est fourni à l'appareil, est tout particulièrement avantageux quand l'appareil considéré est un analyseur de type "compteur de particules".

En effet, dans un tel cas, il est important d'éviter tout à-coup de pression et/ou changement de débit brutal, qui va générer des particules par décollement des surfaces.

Ainsi à titre illustratif, toute actuation de vanne est traditionnellement source de particules. Les vannes à membranes, telles que celles décrites dans le cadre de la figure 5, permettent de minimiser largement ce phénomène.

On le voit donc, l'agencement de la figure 5 permet de façon très avantageux de maintenir une pression et un débit constant, tant dans les lignes de prélèvement que dans la ligne de fourniture de gaz à l'analyseur.

On notera, par ailleurs, que l'agencement de la figure 1 pourrait certes être appliqué au comptage de particules mais de façon probablement moins avantageuse, sauf à mettre en oeuvre un compteur haute pression.

Si la figure 1, illustrait un mode de réalisation de l'invention où chaque ligne de purge 9 passe par un organe 17 de création d'une perte de charge qui est un organe respectif propre à chaque ligne, on constate donc que cette figure 5 illustre pour sa part un autre mode de réalisation de l'invention où chaque ligne de purge 9 passe par un organe de création d'une perte de charge (67) que l'on peut qualifier de commun, puisque situé sur la ligne de purge commune 65/27.

Avantageusement, pour la commutation entre les différentes lignes de prélèvement, on utilise des vannes à membranes qui comportent des moyens de commande de la commutation de l'actionneur entre les positions de mise en communication et d'isolement, telles que par exemple des vannes pneumatiques ou des vannes à commande électromagnétique. Les moyens de commande du déplacement de l'actionneur de chaque vanne sont reliés à une unité de commande, telle que par exemple un micro-ordinateur ou un automate logique. Cette unité de commande comporte des moyens logiques de commutation. Ces moyens logiques sont réalisés, par exemple, par un programme informatique chargé dans le micro-ordinateur, qui exclut que deux vannes à membranes puissent être simultanément en état de mise en communication.

Dans le cas de vannes pneumatiques, il est avantageux de prévoir qu'au moins un des actionneurs de vanne fonctionne en régime "normalement ouvert" car, dans le cas d'une coupure électrique, le gaz contenu dans la ligne de prélèvement raccordée à cette vanne, de préférence un gaz inerte, passe dans la ligne commune de fourniture de gaz et alimente l'analyseur. Ainsi, on évite tout régime transitoire de pression ou de débit entraînant des phénomènes de désorption ou d'adsorption qui nécessitent un temps de purge long afin de rétablir l'équilibre dans la ligne commune de fourniture de gaz.

## Revendications

1. Dispositif pour fournir à un appareil (100) l'un quelconque de plusieurs gaz, comprenant au moins deux vannes (3) reliées chacune d'une part à une ligne de prélèvement de gaz (7) respective et, d'autre part, à une ligne commune (13) de fourniture de gaz à l'appareil (100), **caractérisé en ce que** chaque vanne (3) comprend un premier conduit (5) relié en permanence par une extrémité à la ligne de prélèvement (7) respective et par son autre extrémité à une ligne de purge (9) respective, un deuxième conduit (11) et un actionneur (15) commutable entre une position de mise en communication du premier conduit (5) avec le deuxième conduit (11) et une position d'isolement du premier conduit (5) par rapport au deuxième conduit (11), au moins le deuxième conduit (11) étant libre de volumes de stagnation d'écoulement, **en ce que** les deuxièmes conduits (11) des vannes (3) sont disposés en série dans la ligne commune de fourniture de gaz (13), l'extrémité (21) de cette ligne commune, opposée audit appareil (100), débouchant dans une ligne de purge additionnelle (23), et **en ce que** chaque ligne de purge (9, 23) passe par un organe de création d'une perte de charge (17, 25; 67).

2. Dispositif selon la revendication 1, **caractérisé en ce que** le deuxième conduit (11) de chaque vanne (3) comporte une chambre (39) dans laquelle débouche au moins un conduit (53) de raccordement du premier conduit (5) à ladite chambre (39), et **en ce que** chaque vanne (3) comporte un organe d'obturation (32), sur lequel agit l'actionneur (15) de la vanne, qui obture, dans ladite position d'isolement, l'extrémité du conduit de raccordement (53) débouchant dans ladite chambre (43), et qui est en retrait par rapport à cette extrémité de conduit (53) dans ladite position de mise en communication.

3. Dispositif selon la revendication 2, **caractérisé en ce que** l'extrémité du conduit de raccordement (53) débouchant dans ladite chambre (39), est munie d'un joint d'étanchéité (55) en saillie dans la chambre (39), et **en ce que** l'organe d'obturation (32) comprend une membrane (43) élastiquement déformable formant une partie de paroi de la chambre (39) opposée au joint d'étanchéité (55), la membrane (43) étant appliquée de façon étanche sur le joint d'étanchéité (55) à l'encontre de la force d'élasticité de la membrane dans ladite position d'isolement, par un poussoir (51) de l'actionneur (15).

4. Dispositif selon l'une quelconque des revendications 1 à 3, **caractérisé en ce que** chaque ligne de purge (9, 23) comporte un organe respectif de création d'une perte de charge (17, 25).

5. Dispositif selon la revendication 4, **caractérisé en ce que** toutes les lignes de purge (9, 23) sont raccordées, en aval des organes de création d'une perte de charge (17, 25), à une ligne d'évacuation commune (27).

6. Dispositif selon l'une quelconque des revendications 1 à 3, **caractérisé en ce que** les lignes de purge (9) associés à chaque vanne (3) sont réunies en une ligne de purge commune (65, 27) et **en ce que** ledit organe de création d'une perte de charge par lequel passe chaque ligne de purge (9) est formé par un organe commun de création d'une perte de charge situé sur la ligne de purge commune (65, 27).

7. Dispositif selon l'une quelconque des revendications 1 à 3, **caractérisé en ce que** les lignes de prélèvement (7) et la ligne de purge additionnelle (23) comportent chacune un organe de création d'une perte de charge (63, 25), **en ce que** les lignes de purge (9) associées à chaque vanne (3) sont réunies en une ligne de purge commune (65), et **en ce que** la ligne de purge commune (65) comporte un déverseur (67) pour régler une pression constante dans la ligne commune de fourniture de gaz (13).

8. Dispositif selon l'une quelconque des revendications 4 à 7, **caractérisé en ce qu'**au moins un organe de création d'une perte de charge (17, 25, 63) est un organe de régulation de débit.

9. Dispositif selon la revendication 7, **caractérisé en ce que** au moins un des organes (17, 25; 63) de régulation de débit est formé par un orifice calibré.

10. Dispositif selon l'une quelconque des revendications 1 à 9, **caractérisé en ce que** chaque vanne (3) comporte des moyens de commande de la commutation de l'actionneur (15) entre lesdites positions de mise en communication et d'isolement, **en ce que** les moyens de commande de chaque vanne sont reliés à une unité de commande d'isolement ou de mise en communication de chaque vanne, et **en ce que** l'unité de commande comporte des moyens logiques qui interdisent la commutation simultanée de plusieurs actionneurs en position de communication.

## Patentansprüche

1. Vorrichtung zum Speisen eines Geräts (100) mit einem von mehreren Gasen, die zumindest zwei Ventile (3) umfasst, die jeweils einerseits mit einer jeweiligen Gasentnahmeleitung (7) und andererseits mit einer gemeinsamen Leitung (13) zur Speisung des Geräts (100) mit Gas verbunden sind, **dadurch gekennzeichnet, dass** jedes Ventil (3) eine erste Leitung (5), die dauerhaft an einem Ende mit der entsprechenden Entnahmeleitung (7) und an ihrem anderen Ende mit einer jeweiligen Entlüftungsleitung (9) verbunden ist, eine zweite Leitung (11) und ein Betätigungselement (15), das zwischen einer Position zur Verbindung der ersten Leitung (5) mit der zweiten Leitung (11) und einer Position zur Isolierung der ersten Leitung (5) relativ zur zweiten Leitung (11) umschaltbar ist, umfasst, wobei zumindest die zweite Leitung (11) frei von Strömungsstockungsvolumina ist, dass die zweiten Leitungen (11) der Ventile (3) in Reihe in der gemeinsamen Gasspeiseleitung (13) angeordnet sind, wobei das Ende (21) dieser gemeisamen Leitung, das dem Gerät (100) gegenüberliegt, in eine zusätzliche Entlüftungsleitung (23) mündet, und dass jede Entlüftungsleitung (9, 23) durch ein Organ zur Erzeugung eines Druckabfalls (17, 25; 67) führt.

2. Vorrichtung nach Anspruch 1, **dadurch gekennzeichnet, dass** die zweite Leitung (11) jedes Ventils (3) eine Kammer (39) umfasst, in die zumindest eine Leitung (53) zum Anschluss der ersten Leitung (5) an die Kammer (39) mündet, und dass jedes Ventil (3) ein Verschlussorgan (32) umfasst, auf das das Betätigungselement (15) des Ventils einwirkt und das in der Isolierposition das in die Kammer (43) mündende Ende der Anschlussleitung (53) verschließt und das in der Verbindungsposition relativ zu diesem Leitungsende (53) zurückgezogen ist.

3. Vorrichtung nach Anspruch 2, **dadurch gekennzeichnet, dass** das in die Kammer (39) mündende Ende der Anschlussleitung (53) mit einer in die Kammer (39) vorspringenden Dichtung (55) versehen ist und dass das Verschlussorgan (32) eine elastisch verformbare Membran (43) umfasst, die ein Wandteil der Kammer (39) bildet, das der Dichtung (55) gegenüberliegt, wobei in der Isolierposition die Membran (43) durch einen Andrücker (51) des Betätigungselements (15) gegen die Elastizitätskraft der Membran dicht an der Dichtung (55) zur Anlage gebracht wird.

4. Vorrichtung nach einem der Ansprüche 1 bis 3, **dadurch gekennzeichnet, dass** die Entlüftungsleitung (9, 23) ein jeweiliges Organ zur Erzeugung eines Druckabfalls (17, 25) umfasst.

5. Vorrichtung nach Anspruch 4, **dadurch gekennzeichnet, dass** alle Entlüftungsleitungen (9, 23) stromabwärts von den Organen zur Erzeugung eines Druckabfalls (17, 25) an eine gemeinsame Ablassleitung (27) angeschlossen sind.

6. Vorrichtung nach einem der Ansprüche 1 bis 3, **dadurch gekennzeichnet, dass** die mit jedem Ventil (3) verknüpften Entlüftungsleitungen (9) in einer gemeinsamen Entlüftungsleitung (65, 27) zusammengeführt werden und dass das Organ zur Erzeugung eines Druckabfalls, durch das jede Entlüftungsleitung (9) verläuft, von einem gemeinsamen Organ zur Erzeugung eines Druckabfalls gebildet wird, das in der gemeinsamen Entlüftungsleitung (65, 27) liegt.

7. Vorrichtung nach einem der Ansprüche 1 bis 3, **dadurch gekennzeichnet, dass** die Entnahmeleitungen (7) und die zusätzliche Entlüftungsleitung (23) jeweils ein Organ zur Erzeugung eines Druckabfalls (63, 25) umfassen, dass die mit jedem Ventil (3) verknüpften Entlüftungsleitungen (9) zu einer gemeinsamen Entlüftungsleitung (65) zusammengeführt werden, und dass die gemeinsame Entlüftungsleitung (65) eine Ablassvorrichtung (67) zum Regeln eines konstanten Drucks in der gemeinsamen Gasspeiseleitung (13) umfasst.

8. Vorrichtung nach einem der Ansprüche 4 bis 7, **dadurch gekennzeichnet, dass** zumindest eines der Organe zur Erzeugung eines Druckabfalls (17, 25, 63) ein Durchflussregelorgan ist.

9. Vorrichtung nach Anspruch 7, **dadurch gekennzeichnet, dass** zumindest eines der Durchflussregelorgane (17, 25; 63) von einer kalibrierten Öffnung gebildet wird.

10. Vorrichtung nach einem der Ansprüche 1 bis 9, **dadurch gekennzeichnet, dass** jedes Ventil (3) Mittel zur Steuerung der Umschaltung des Betätigungselements (15) zwischen der Verbindungsposition und der Isolierposition umfasst und dass die Steuermittel jedes Ventils mit einer Einheit zur Steuerung der Isolierung oder der Verbindung für jedes Ventil verbunden sind und dass die Steuereinheit Logikmittel umfasst, die die gleichzeitige Umschaltung mehrerer Betätigungselemente in die Verbindungsposition unterbindet.

## Claims

1. Device for delivering any one of a plurality of gases to an apparatus (100), comprising at least two valves (3) each connected, on the one hand, to a respective gas sampling line (7) and, on the other hand, to a common line (13) for delivering gas to the apparatus (100), **characterized in that** each valve (3) comprises a first conduit (5) permanently connected via one end to the respective sampling line (7) and via its other end to a respective purge line (9), a second conduit (11) and an actuator (15) which can be switched between a position for bringing the first conduit (5) into communication with the second conduit (11) and a position for isolating the first conduit (5) from the second conduit (11), at least the second conduit (11) being free of flow-stagnation volumes, **in that** the second conduits (11) of the valves (3) are placed in series in the common gas delivery line (13), the end (21) of this common line, opposite the said apparatus (100), emerging in an additional purge line (23) and **in that** each purge line (9, 23) passes through an element (17, 25; 67) for creating a pressure drop.

2. Device according to Claim 1, **characterized in that** the second conduit (11) of each valve (3) includes a chamber (39) in which emerges at least one conduit (53) connecting the first conduit (5) to the said chamber (39) and **in that** each valve (3) includes a closure element (32) on which the actuator (15) of the valve acts, which closure element, in the said isolating position, closes off the end of the connecting conduit (53) emerging in the said chamber (43) and which is set back with respect to this end of the conduit (53) in the said communicating position.

3. Device according to Claim 2, **characterized in that** the end of the connecting conduit (53) emerging in the said chamber (39) is provided with a seal (55) projecting into the chamber (39) and **in that** the closure element (32) comprises an elastically deformable diaphragm (43) forming part of the wall of the chamber (39) opposite the seal (55), the diaphragm (43) being pressed in a sealed manner onto the seal (55) against the spring force of the diaphragm, in the said isolating position, by a pusher (51) of the actuator (15).

4. Device according to any one of Claims 1 to 3, **characterized that** each purge line (9, 23) includes a respective element (17, 25) for creating a pressure drop.

5. Device according to Claim 4, **characterized in that** all the purge lines (9, 23) are connected, downstream of the elements (17, 25) for creating a pressure drop, to a common evacuation line (27).

6. Device according to any one of Claims 1 to 3, **characterized in that** the purge lines (9) associated with each valve (3) are joined into a common purge line (65, 27) and **in that** the said element for creating a pressure drop, through which each purge line (9) passes, is formed by a common element for creating a pressure drop, lying on the common purge line (65, 27).

7. Device according to any one of Claims 1 to 3, **characterized in that** the sampling lines (7) and the additional purge line (23) each include an element (63, 25) for creating a pressure drop, **in that** the purge lines (9) associated with each valve (3) are joined into a common purge line (65) and **in that** the common purge line (65) includes a diverter (67) for setting a constant pressure in the common gas delivery line (13).

8. Device according to any one of Claims 4 to 7, **characterized in that** at least one element (17, 25, 63) for creating a pressure drop is a flow-regulating element.

9. Device according to Claim 7, **characterized in that** at least one of the flow-regulating elements (17, 25; 63) is formed by a gauged orifice.

10. Device according to any one of Claims 1 to 9, **characterized in that** each valve (3) includes means for controlling the switching of the actuator (15) between the said communicating and isolating positions, **in that** the means for controlling each valve are connected to a control unit for isolating each valve or for bringing it into communication, and **in that** the control unit includes logic means which prevent the simultaneous switching of several actuators in the communicating position.
